# EUROPÄISCHE PATENTSCHRIFT

(11) **EP 1 865 767 B1**
(45) Veröffentlichungstag und Bekanntmachung des Hinweises auf die Patenterteilung: **26.06.2013**
(21) Anmeldenummer: 05816543.2
(22) Anmeldetag: 11.11.2005
(51) Int. Cl.: A01L 7/04

(54) **HUFEISEN ZUR AUFNAHME VON VERRASTBAREN STOLLEN**
HORSESHOE FOR ACCOMMODATING LOCKING CLEATS
FER À CHEVAL DESTINÉ À RECEVOIR DES CRAMPONS VERROUILLABLES

(30) Priorität: 24.02.2005 DE 202005003010 U
(43) Veröffentlichungstag der Anmeldung: 19.12.2007
(73) Patentinhaber: Convince GmbH i.Gr., 45131 Essen (DE)
(72) Erfinder: Baruffolo, Sergio, 44869 Bochum (DE)
(74) Vertreter: Albrecht, Dirk
(86) Internationale Anmeldenummer: PCT/DE2005/002028
(87) Internationale Veröffentlichungsnummer: WO 2006/089497

(56) Entgegenhaltungen:
- DE-A1- 10 261 085
- DE-U1- 29 611 252
- FR-A- 553 118
- US-A- 1 361 744
- US-A- 1 479 719

## Beschreibung

Die Erfindung betrifft ein Hufeisen gemäß dem Oberbegriff von Anspruch 1, ein Verfahren zur Bestellung eines Hufeisens, ein Stollenset zur Durchführung des Verfahrens zur Bestellung von Hufeisen und eine Verwendung eines Adapters zur Bestellung von Hufeisen.

Pferde müssen in regelmäßigen Abständen mit Hufeisen beschlagen werden. Bei Hufeisen für Pferde, die überwiegend auf weichem Boden laufen, sind zudem an der Unterseite der Hufeisen Stollen vorgesehen, um für die Pferde auch auf nicht ausreichend Stabilität verleihenden Untergründen den notwendigen sicheren Tritt zu gewährleisten. Gebräuchlich sind hier Stollen, die über Schraubverbindungen mit Hufeisen verbunden werden. In der jüngeren Vergangenheit haben sich aber zunehmend auch Stollen etabliert, welche mittels einer Rastverbindung in den Hufeisen gesichert sind. Derartige Stollen sind beispielsweise aus der DE-OS 102 61 085 bekannt und in mehrerlei Hinsicht von großem Vorteil. So ist eine Rast- wesentlich leichter herstellbar als eine Schraubverbindung. Die verrastbaren Stollen lassen sich einfacher montieren und demontieren, es ist praktisch ausgeschlossen, dass sie sich während des Reitens lösen können oder auch ein Verdrecken der Bohrung ist nicht weiter problematisch, da die Stollen auch unter diesen Voraussetzungen befestigt werden können. Um eine besonders sichere Verbindung zwischen Hufeisen und Stollen und damit eine lange Laufzeit der Stollen zu erreichen, ist es aber notwendig, nicht nur die Stollen, sondern auch die diese aufnehmenden Hufeisen standardmäßig möglichst so präzise aufzuarbeiten, dass sie höchsten Anforderungen und Belastungen Stand halten und dass Fehler bei der Herstellung und Vorbereitung der Hufeisen praktisch ausgeschlossen sind.

Diese Aufgabe wird dadurch gelöst, dass in mindestens eine der Bohrungen ein Adapter eingesetzt ist, welcher zur Aufnahme eines Stollens dient.

Dabei ist der Stollen nicht direkt in dem Hufeisen positioniert, vielmehr ist zwischen Stollen und Hufeisen ein Adapter angeordnet. Dieser ist in der Bohrung im Hufeisen entweder über dessen komplette Tiefe oder aber bei einer Ausführung mit Rastabsatz nur in diesem fixiert und dabei so ausgebildet, dass der Raststollen dort sicher und zuverlässig gehalten ist. Der Adapter dient zur Stabilisierung der Bohrung in dem Hufeisen und zugleich zu einer gewissen Standardisierung, indem die Stollen nunmehr nur an den Adapter unabhängig von der Qualität des Hufeisens anzupassen sind.

Bevorzugterweise ist dabei vorgesehen, dass der Adapter als Zylinder ausgebildet ist, dessen Durchmesser dem des Rastsbsatzes entspricht Da sich mit zunehmender Zeit auch weichere Hufeisen, beispielsweise aus Aluminium, großer Beliebtheit erfreuen, kann es notwendig sein, die erfindungsgemäßen Adapter auch als eine Art Stabilisierungshülsen in solchen Materialien einzusetzen, um zu verhindern, dass sich die Stollen in das weichere Material des Hufeisens hineinfressen und auf diese Weise dafür sorgen, dass der Halt verloren geht. Da der Rastabsatz der relevante Bereich ist, der korrespondierend zu dem Stollen zwischen dessen Anschlag und den Federelementen ausgebildet ist, genügt es im Prinzip, wenn der Adapter vergleichbar kurz nur in diesem Teil der Bohrung angesehen ist. Es ist aber auch alternativ dazu denkbar, den Adapter als abgestuften Zylinder mit zwei verschiedenen Durchmessern auszubilden, wovon einer mit der eigentlichen Bohrung und der andere mit dem Rastabsatz korrespondiert.

In Hinblick auf die Verbindung zwischen Hufeisen und Adapter ist vor allem daran gedacht, dass der Adapter Ober eine Verschraubung mit dem Hufeisen verbunden ist. Der Adapter weist dazu außen ein Gewinde auf, das zu einem Innengewinde am Hufeisen bzw. in der Bohrung im Hufeisen korrespondiert.

Es versteht sich, dass bei der Ausführungsform mit Rastabsatz insbesondere daran gedacht ist, dass der Adapter über eine Verschraubung mit dem Rastabsatz verbunden ist

Eine weitere bevorzugte Ausführungsform der Erfindung sieht vor, dass der Adapter an seinem der Unterseite des Hufeisens zugewandten Ende einen Kragen aufweist dass der Adapter also mit seinem Kragen an der Unterseite des Hufeisens um die Bohrung herum anliegt. Dieser Kragen gleicht etwaige Unebenheiten an der Unterseite des Hufeisens aus und bietet zugleich eine Angriffsfläche für ein Werkzeug, um den Adapter in die Bohrung einsetzen - bzw. aus dieser herausdrehen zu können.

In Hinblick darauf wird vorgeschlagen, dass der Kragen im Wesentlichen viereckig ausgebildet ist, wobei die Ecken abgekantet ausgebildet sein können, um das Ansetzen eines Werkzeugs zu vereinfachen.

Außerdem ist vorgesehen, dass der Adapter aus einem gehärteten Material hergestellt ist. Gerade bei Hufeisen aus einem weicheren Material wie z. B. Aluminium, aber auch bei vergleichsweise härteren Materialien bringt dies den Vorteil mit sich, dass letztlich die Härte des Adapters die Stabilität der Rastverbindung vorgibt. Hiermit kann die angesprochene Standardisierung relativ unabhängig von der Qualität des Hufeisens gewährleisten werden, da keine direkte Verbindung zwischen Hufeisen und Stollen bestehen muss. Vielmehr dient der Adapter zunächst zur Aufnahme der Kräfte und Momente. Es ist dabei sowohl denkbar, dass der Adapter vor als auch nach dem Schmieden in das Hufeisen eingesetzt wird. Ein weiterer Vorteil besteht darin, dass aufgrund der Ausbildung und Anordnung des Adapters die Güte der Unterseite des Hufeisens nachrangig ist.

Die Erfindung zeichnet sich insbesondere dadurch aus, dass ein Hufeisen für den Pferdesport geschaffen ist, das besonders gut zur Aufnahme von verrastbaren Stollen geeignet ist, indem sich an der Unterseite des Hufeisens ein Rastabsatz mit geringerem Durchmesser als die eigentliche Bohrung befindet, der eine Tiefe von ca. 3 - 5 mm aufweist und damit ausreichenden seitlichen Halt für die Stollen gewährleistet. Dies liegt zum einen daran, dass die vorgeschlagene Tiefe ausreichend bemessen ist, um den seitlichen Hält zu gewährleisten und ein Einrasten zwischen dem Anschlag und den Federelementen im Rastbereich des Stollens bewirkt und zum anderen daran, dass dieser Bereich besonders präzise vorbereitet und bearbeitet werden kann. Zwischen den Bohrungen im Hufeisen und den Raststollen können außerdem Adapter aus einem gehärteten Material positioniert sein, die in die Bohrung im Hufeisen eingeschraubt und in denen dann wiederum die Raststollen positioniert werden.

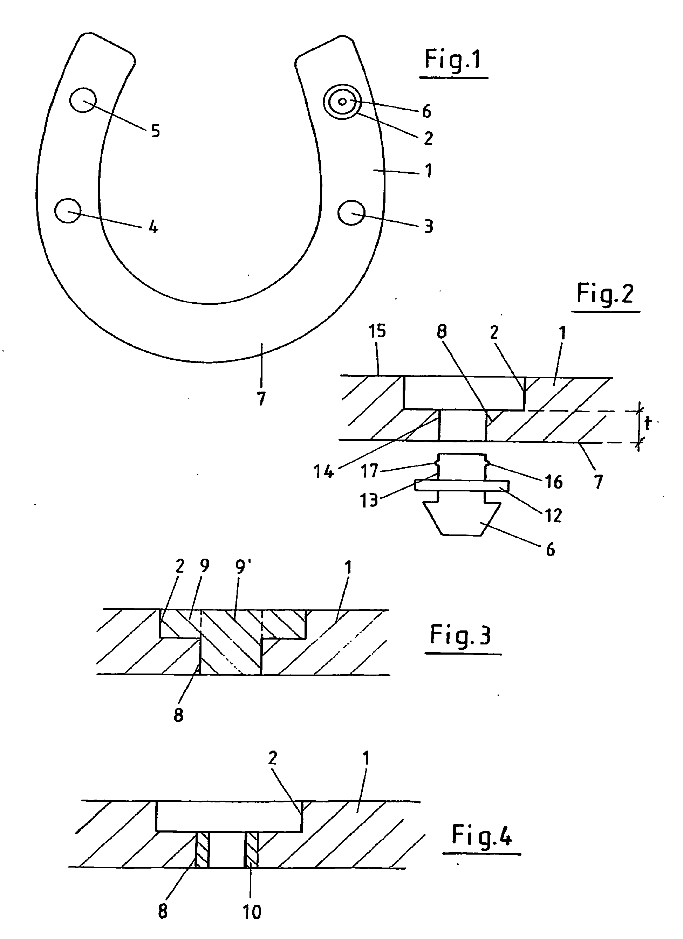

Weitere Einzelheiten des Erfindungsgegenstandes ergeben sich aus der nachfolgende Beschreibung der zugehörigen Zeichnung, in der ein bevorzugtes Ausführungsbeispiel mit den dazu notwendigen Einzelheiten und Einzelteilen dargestellt ist Es zeigen die Figuren 1-3 Ausführungen ohne den erfindungsgemässen Adapter.
- Figur 1: ein Hufeisen in Draufsicht,
- Figur 2: einen Stollen und eine Bohrung,
- Figur 3: eine Bohrung mit Bohrkern,
- Figur 4: eine Bohrung mit Stabilisierungshülse
- Figur 5: einen eingesetzten Stollen mit Adapter und
- Figur 6: einen Adapter In Draufsicht.

Figur 1 zeigt ein Hufeisen 1 mit den Bohrungen 2, 3, 4 und 5 von der Unterseite 7 her. Lediglich in die hier im Prinzip verdeckte Bohrung 2 ist ein Stollen 6 eingesetzt, was hier nur zur Veranschaulichung dienen soll.

In Figur 2 ist eine Bohrung dargestellt, bestehend aus der eigentlichen Bohrung 2 und dem Rastabsatz 8 geringeren Durchmessers. Es handelt sich also quasi um eine zweiteilige Bohrung. Die Tiefe dieses Rastabsatzes 8 ist hier so bemessen, dass ausreichender, vor allem seitlicher Halt als Ergänzung zu den Rastelementen für den Stollen 6 gegeben ist Von daher korrespondiert die Tiefe t mit dem Stollen 6 und zwar in dessen Rastbereich 13 zwischen dem Anschlag 12 einerseits und den beiden Rastelementen 16 und 17 andererseits. Zur Herstellung der Bohrung 2 wird zunächst von der Unterseite 7 her die Bohrung 14 in das Hufeisen getrieben, anschließend wird die eigentliche Bohrung 2 von der Oberseite 15 des Hufeisens her eingetrieben, so dass sich der Rastabsatz 8 bildet. Dieser sollte dann noch mit einer Reibahle exakt nachbearbeitet werden, so dass sich eine präzise Verbindung zwischen Hufeisen 1 und dem eingesetzten Raststollen 6 ergeben kann.

Figur 3 zeigt das Hufeisen 1 mit der Bohrung 2, in die der Bohrkern 9 eingesetzt ist. Dieser ist aus einem gehärteten Metall hergestellt und kann somit nach der Herstellung bzw. Bearbeitung des Hufeisens 1 durch einen einfachen Schlag wieder aus diesem herausgetrieben werden. Mit 9' und in gestrichelter Darstellung dargestellt ist eine Variante dieses Bohrkems 9, bei der deren Durchmesser lediglich dem Durchmesser des Rastabsatzes 8 entspricht Nach Entfernen dieses Bohrkems 9' wäre also die eigentliche Bohrung 2 mit dem größeren Durchmesser noch herzustellen.

Ergänzend hierzu zeigt Figur 4 ein Hufeisen 1 mit einem Adapter 10, der ebenfalls aus härterem Material als das Hufeisen 1 hergestellt ist und dessen Zweck primär darin liegt, zusätzlichen seitlichen Halt für den Stollen im Bereich des Rastabsatzes zu bieten, insbesondere dann, wenn das Hufeisen 1 aus einem weicheren Material, wie beispielsweise Aluminium, hergestellt ist

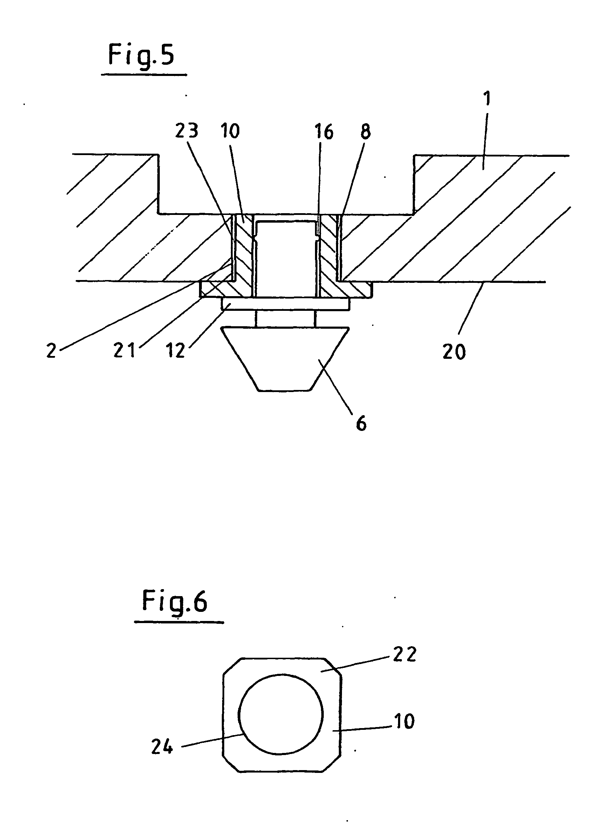

Einen Schnitt durch das Hufeisen mit eingesetztem Stollen 6, hier mit einem Adapter 10 zeigt Figur 5. Bei dieser Ausführung ist der Adapter 10 nur im Rastabsatz 8 positioniert. Der Adapter 10 weist im Wesentlichen die Form eines Zylinders 11 auf, an dem der Unterseite 20 zugewandten Ende 21 sieht der Adapter 10 einen Kragen 22 vor. Dabei ist gut zu erkennen, dass der Adapter 10 damit insgesamt an der Unterseite 20 des Hufeisens 1 vorsteht und aus der Bohrung 2 herausragt. Mit dem Anschlag 12 und den Rastelementen 16 ist der Stollen 6 in den Adapter 10 eingesetzt Der Adapter 10 selbst ist über die Verschraubung 23 in Form eines Gewindes mit dem Hufeisen 1 verbunden.

Schließlich zeigt Figur 6 den Adapter 10 in Draufsicht. Dabei ist die viereckige Kontur des Kragens 22 mit den abgekanteten Ecken zu erkennen, wodurch sich eine gute Angriffsfläche für ein Werkzeug ergibt Die Öffnung 24 dient zur Aufnahme des hier nicht dargestellten Stollens.

## Patentansprüche

1. Hufeisen (1) für den Pferdesport mit mehreren Bohrungen (2, 3, 4, 5) zur Aufnahme von verrastbaren Stollen (6), **dadurch gekennzeichnet, dass** in mindestens eine der Bohrungen (2) ein Adapter (10) eingesetzt ist, welcher zur Aufnahme eines Stollens (6) dient.

2. Hufeisen (1) nach Anspruch 1, **dadurch gekennzeichnet, dass** der Adapter (10) als Zylinder ausgebildet ist, dessen Durchmesser dem eines Rastabsatzes (8) entspricht.

3. Hufeisen (1) nach Anspruch 1, **dadurch gekennzeichnet, dass** der Adapter (10) als ein abgestufter Zylinder mit zwei verschiedenen Durchmessern ausgebildet ist, wovon einer mit der Bohrung (2) und der andere mit einem Rastabsatz (8) korrespondiert.

4. Hufeisen (1) nach einem der vorherigen Ansprüche, **dadurch gekennzeichnet, dass** der Adapter (10) über eine Verschraubung (23) mit dem Hufeisen (1) verbunden ist.

5. Hufeisen (1) nach Anspruch 1, **dadurch gekennzeichnet, dass** der Adapter (10) über eine Verschraubung (23) mit dem Rastabsatz (8) verbunden ist.

6. Hufeisen (1) nach Anspruch 1, **dadurch gekennzeichnet, dass** der Adapter (10) an seinem der Unterseite (20) des Hufeisens (1) zugewandten Ende (21) einen Kragen (22) aufweist.

7. Hufeisen (1) nach Anspruch 6, **dadurch gekennzeichnet, dass** der Kragen (22) im Wesentlichen viereckig ausgebildet ist.

8. Hufeisen (1) nach Anspruch 1, **dadurch gekennzeichnet, dass** der Adapter (10) aus einem gehärteten Material hergestellt ist.

9. Verfahren zur Bestollung von Hufeisen (1) für den Pferdesport, bei dem zunächst eine Bohrung (2) in das Hufeisen (1) gebohrt wird, ein Adapter (10) in die Bohrung (2) eingesetzt wird und ein Stollen (6) in den Adapter (10) eingesetzt und mit diesem verrastet wird.

10. Verfahren nach Anspruch 9, **dadurch gekennzeichnet, dass** ein Adapter (10) verwendet wird, der als Zylinder ausgestaltet ist, dessen Durchmesser dem eines Rastabsatzes (8) entspricht.

11. Verfahren nach Anspruch 9, **dadurch gekennzeichnet, dass** ein Adapter (10) verwendet wird, der als ein abgestufter Zylinder mit zwei verschiedenen Durchmessern ausgebildet ist, wovon einer mit der Bohrung (2) und der andere mit einem Rastabsatz (8) korrespondiert.

12. Stollenset zur Durchführung des Verfahrens zur Bestollung von Hufeisen (1) für den Pferdesport nach einem der Ansprüche 9 bis 11, mit einem Adapter (10), der in eine Bohrung (2) eines Hufeisens (1) einbringbar ist, und einem verrastbaren Stollen (6), welcher in den Adapter (10) einsetzbar und mit diesem verrastbar ist.

13. Stollenset nach Anspruch 12, **dadurch gekennzeichnet, dass** der Adapter (10) als Zylinder ausgebildet ist, dessen Durchmesser dem eines Rastabsatzes (8) entspricht.

14. Stollenset nach Anspruch 12, **dadurch gekennzeichnet, dass** der Adapter (10) als ein abgestufter Zylinder mit zwei verschiedenen Durchmessern ausgebildet ist, wovon einer mit der Bohrung (2) und der andere mit einem Rastabsatz (8) zum Eingriff mit dem verrastbaren Stollen (6) korrespondiert.

15. Verwendung eines Adapters (10) zur Bestollung von Hufeisen (1) für den Pferdesport, wobei zunächst eine Bohrung (2) in ein Hufeisen (1) gebohrt wird und der Adapter (10) zur Aufnahme eines verrastbaren Stollens (6) in die Bohrung (2) eingesetzt wird und mit diesem verrastet.

16. Verwendung eines Adapters (10) nach Anspruch 15, **dadurch gekennzeichnet, dass** der Adapter (10) als ein abgestufter Zylinder mit zwei verschiedenen Durchmessern ausgebildet ist, wovon einer mit der Bohrung (2) und der andere mit einem Rastabsatz (8) korrespondiert.

17. Verwendung des Adapters (10) nach Anspruch 15, **dadurch gekennzeichnet, dass** der Adapter (10) als Zylinder ausgebildet ist, dessen Durchmesser dem eines Rastabsatzes (8) entspricht.

## Claims

1. Horse shoe (1) for equestrian sport with several holes (2, 3, 4, 5) for accommodating locking cleats (6), **characterized in that** in at least one of the holes (2) an adapter (10) is inserted which serves to accommodate a cleat (6).

2. Horse shoe (1) in accordance with claim 1, **characterized in that** the adapter (10) is designed as a cylinder, the diameter of which corresponds to the locking projection (8).

3. Horse shoe (1) in accordance with claim 1, **characterized in that** the adapter (10) is designed as a stepped cylinder with two different diameters, one of them corresponding with the hole (2) and the other one corresponding with a locking projection (8).

4. Horse shoe (1) in accordance with any preceding claim, **characterized in that** the adapter (10) is connected to the horse shoe (1) by means of a screw-type connection.

5. Horse shoe (1) in accordance with claim 1, **characterized in that** the adapter (10) is connected via a screw-type connection (23) to the locking projection (8).

6. Horse shoe (1) in accordance with claim 1, **characterized in that** the adapter (10) has a collar (22) at its end (21) facing the underside (20) of the horse shoe (1).

7. Horse shoe (1) in accordance with claim 6, **characterized in that** the collar (22) is essentially square-shaped.

8. Horse shoe (1) in accordance with claim 1, **characterized in that** the adapter (10) is made of a hardened material.

9. Method of locking cleats (6) at a horse shoe (1) for equestrian sport, wherein firstly a hole (2) is drilled into the horse shoe (1), an adapter (10) is inserted into the hole (2), and a locking cleat (6) is inserted into the adapter (10) and locked herewith.

10. Method in accordance with claim 9, **characterized in that** an adapter (10) is used, which is designed as a cylinder, the diameter of which corresponds to a locking projection (8).

11. Method in accordance with claim 9, **characterized in that** an adapter (10) is used, which is designed as a stepped cylinder having two different diameters, one of them corresponding with the hole (2) and the other one corresponding with a locking projection (8).

12. Cleat set for conducting the method of locking cleats (6) on a horse shoe (1) for equestrian sport in accordance with any of claims 9 to 11, with an adapter (10), that can be inserted in a hole (2) of a horse shoe (1), and a locking cleat (6), that can be inserted in the adapter (10) and can be locked therewith.

13. Cleat set in accordance with claim 12, **characterized in that** the adapter (10) is designed as a cylinder, the diameter of which corresponds to a looking projection.

14. Cleat set in accordance with claim 12, **characterized in that** the adapter (10) is designed as a stepped cylinder with two different diameters, one of them corresponding with the hole (2) and the other one corresponding with a locking projection (8).

15. Use of an adapter (10) for locking cleats (6) on a horse shoe (1) for equestrian sport, wherein firstly a hole (2) is drilled into a horse shoe (1) and the adapter (10) for accommodating a locking cleat (6) is inserted in the hole (2) and locked therewith.

16. Use of the adapter (10) in accordance with claim 15, **characterized in that** the adapter (10) is designed as a stepped cylinder with two different diameters, one of them corresponding with the hole (2) and the other one corresponding with a locking projection (8).

17. Use of the adapter (10) in accordance with claim 15, **characterized in that** the adapter (10) is designed as a cylinder, the diameter of which corresponds to a locking projection (8).

## Revendications

1. Fer à cheval (1) pour le sport équestre avec plusieurs orifices (2, 3, 4, 5) pour recevoir des crampons accrochables (6), **caractérisé en ce que** un adaptateur (10) est placé dans au moins un des orifices (2) et sert à recevoir un crampon (6).

2. Fer à cheval (1) selon la revendication 1, **caractérisé en ce que** l'adaptateur (10) est formé comme un cylindre dont le diamètre correspond à celui du talon verrouillable (8).

3. Fer à cheval (1) selon la revendication 1, **caractérisé en ce que** l'adaptateur (10) est formé comme un cylindre gradué avec deux diamètres différents, desquels l'un correspond à l'orifice (2) et l'autre correspond à un talon verrouillable (8) en vue de l'engrènement avec le crampon verrouillable (6).

4. Fer à cheval (1) selon une des revendications précédentes, **caractérisé en ce que** l'adaptateur (10) est relié au fer à cheval (1) par un vissage (23).

5. Fer à cheval (1) selon la revendication 1, **caractérisé en ce que** l'adaptateur (10) est relié au talon verrouillable (8) par un vissage (23).

6. Fer à cheval (1) selon la revendication 1, **caractérisé en ce que** l'adaptateur (10) présente un col (22) à son extrémité (21) qui est tournée vers le côté inférieur du fer à cheval (1).

7. Fer à cheval (1) selon la revendication 6, **caractérisé en ce que** le col (22) a une forme essentiellement carrée.

8. Fer à cheval (1) selon la revendication 1, **caractérisé en ce que** l'adaptateur (10) à l'aide d'un matériel trempé.

9. Procédé d'application de crampons de fer à cheval (1) pour le sport équestre, au cours duquel un orifice (2) est d'abord percé dans le fer à cheval (1), un adaptateur (10) est inséré dans l'orifice (2), et un crampon verrouillable (6) est installé dans l'adaptateur (10) et verrouillé avec celui-ci.

10. Procédé selon la revendication 9, **caracterise en ce que** un adaptaeur (10) est usé formé comme un cylindre dont le diamètre correspond à celui d'un talon verrouillable.

11. Procédé selon la revendication 9, **caractérisé en ce que** un adaptateur (10) est usé formé comme un cylindre gradué avec deux diamètres différents, desquels l'un correspond à l'orifice (2) et l'autre correspond à un talon verrouillable (8).

12. Ensemble de crampons pour effectuer le procédé d'application de crampons au fer à cheval (1) pour le sport équestre selon une des revendications précédentes, avec un adaptateur (10) pouvant être inséré dans un orifice (2) du fer à cheval (1), et un crampon verrouillable (6) pouvant être inséré dans l'adaptateur (10) et verrouillé avec celui-ci.

13. Ensemble de crampons selon la revendication 12, **caractérisé en ce que** l'adaptateur (10) est usé formé comme un cylindre dont le diamètre correspond à celui d'un talon verrouillable.

14. Ensemble de crampons selon la revendication 12, **caractérisé en ce que** l'adaptateur (10) est formé comme un cylindre gradué avec deux diamètres différents, desquels l'un correspond à l'orifice (2) et l'autre correspond à un talon verrouillable (8) en vue de l'engrènement avec le crampon verrouillable (6).

15. Utilisation d'un adaptateur (10) pour l'application de crampons à un fer à cheval (1) pour le sport équestre, pour lequel un orifice (2) est d'abord percé dans le fer à cheval (1) et un adaptateur (10) est inséré dans l'orifice (2) en vue de recevoir le crampon verrouillable et verrouillé avec celui-ci.

16. Utilisation d'un adaptateur selon la revendication 15, **caractérisé en ce que** lequel l'adaptateur (10) est formé comme un cylindre gradué avec deux diamètres différents, desquels l'un correspond à l'orifice (2) et l'autre correspond à un talon verrouillable (8).

17. Utilisation d'un adaptateur selon la revendication 15, **caractérisé en ce que** l'adaptateur (10) est formé comme un cylindre dont le diamètre correspond à celui à un talon verrouillable (8).
